# EUROPÄISCHE PATENTSCHRIFT

(11) **EP 1 453 636 B1**
(45) Veröffentlichungstag und Bekanntmachung des Hinweises auf die Patenterteilung: **02.08.2006**
(21) Anmeldenummer: 02791624.6
(22) Anmeldetag: 10.12.2002
(51) Int. Cl.: B23K 35/26, B23K 101/36

(54) **BLEIFREIES WEICHLOT**
LEAD-FREE SOFT SOLDER
BRASAGE SANS PLOMB

(30) Priorität: 15.12.2001 DE 10161826
(43) Veröffentlichungstag der Anmeldung: 08.09.2004
(73) Patentinhaber: Pfarr Stanztechnik Gmbh, 36419 Buttlar (DE)
(72) Erfinder: PFARR, Roland, 63571 Gelnhausen/Hailer (DE); WALTER, Herrmann, 36419 Geisa (DE); WALD, Hermann, 36419 Buttlar (DE)
(86) Internationale Anmeldenummer: PCT/DE2002/004525
(87) Internationale Veröffentlichungsnummer: WO 2003/051572

(56) Entgegenhaltungen:
- EP-A- 1 231 015
- US-A- 5 527 628
- US-B1- 6 224 690
- US-B1- 6 231 691
- DATABASE CA [Online] CHEMICAL ABSTRACTS SERVICE, COLUMBUS, OHIO, US; WANG, LAI ET AL: "Lead-free tin alloy brazing solder containing rare earth metals" retrieved from STN Database accession no. 138:110603 XP002237443 & CN 1 346 728 A (DALIAN SCIENCE AND ENGINEERING UNIV., PEOP. REP. CHINA) 1. Mai 2002 (2002-05-01)

## Beschreibung

Die Erfindung betrifft ein bleifreies Weichlot insbesondere für den Einsatz in der Elektronik und Elektrotechnik.

Die in der Elektronik und Elektrotechnik verwendeten Weichlote sollen neben einem guten Benetzungsverhalten gegenüber den thermisch zu fügenden metallischen Bauteilen auch einen möglichst kleinen elektrischen Widerstand im Nahtübergang wie auch möglichst eine hohe Wechselfestigkeit besitzen, so daß mit diesen Weichloten selbst Werkstoffe mit sehr unterschiedlichen thermischen Ausdehnungskoeffizienten miteinander gefügt werden können.
Von besonderer Bedeutung ist dabei auch, daß die Schmelzpunkte bzw. Schmelzbereiche der Lote einerseits ausreichend über den maximalen Betriebstemperaturen liegen, aber gleichzeitig auch so niedrig sind, daß die durch Weichlöten zu fügenden Bauteile nicht infolge der für den Fügeprozess mit diesen Loten erforderlichen Schmelztemperaturen beschädigt werden.
Darüber hinaus ist es für ein optimales Lötverhalten vorteilhaft, wenn die als Lote verwendeten Legierungen über eutektische, bzw. nahezu eutektische Eigenschaften verfügen.
Insbesondere bei Loten die zur Herstellung von BGA-Kugeln (Lotkugeln für die Chip-Herstellung) verwendet werden sollen, ist neben sehr guten mechanischen und elektrischen Eigenschaften zudem auch eine glatte homogene Oberfläche der Lötstelle zwingend erforderlich, damit im Rahmen einer effektiven Qualitätskontrolle der Lötstellen diese aufgrund ihres Glanzes schnell und fehlerfrei optisch ausgewertet werden können.
Daher besteht eine sehr wesentliche Anforderung insbesondere an diese zur Herstellung von BGA-Kugeln (Lotkugeln für die Chip-Herstellung) verwendeten Legierungen darin, daß beim Erkalten der Lote Dentridbildungen vermieden werden sollten, da das im Zusammenhang mit der Ausbildung von groben Zinndentriden auftretende grobkörnige Gefüge sehr stark die glatte homogene Oberfläche der Lötstelle und somit deren Glanz beeinträchtigt.
Da die Lote oftmals die Grenzfläche zwischen Materialien mit sehr unterschiedlichen Temperaturausdehnungskoeffizienten bilden, können aufgrund des im Zusammenhang mit der Ausbildung eines grobkörnigen Gefüges auftretende, durch Temperaturschwankungen verursachten Scherspannungen hervorgerufen werden, die beispielsweise in Verbindung mit dem Temperaturwechsel während des Abkühlens nach dem Löten eine Beschädigungen der Lötverbindung zur Folge haben.
All diese sehr unterschiedlichen vorgenannten Anforderungen konnten bisher von den SnPb-Loten in vollem Umfang erfüllt werden.
Da Blei jedoch toxisch ist, soll es im Bereich der europäischen Union aus Gründen des Arbeits- und Umweltschutzes bereits bis zum Jahr 2006 aus der Elektronik verbannt sein.
Aus der US 5,980,822 und der US 5,918,795 sind nun beispielsweise SnBi-Lote bekannt geworden, die sich aufgrund ihres niedrigen Schmelzpunktes als Alternative beispielsweise für SnPb-Lote anbieten.
Ein wesentlicher Nachteil dieser Legierungen besteht auch darin, daß Wismut eine schlechte Löteignung bewirkt.
Die in der EP 0858859 vorbeschriebene Verwendung von Wismut zur Senkung des Schmelzpunktes bei Zinn - Silber - Kupferlegierungen ist für die Anwendung bei BGA - Kugeln (ball-grid array) nachteilig, da Wismut außerdem die Duktilität erhöht und die erwünschte Elastizität der Lotkugeln stark einschränkt.

Diese Lote haben niedrige Scher- und Zeitstandsfestigkeiten.
In der US 6,231,691 B1 wird einem gemäß US 5,527,628 vorbeschriebenen eutektischen Sn-4.7%Ag-1.7%Cu Lot einerseits 0.15% Ni beigegeben.
Die eutektische Schmelztemperatur des Basislotes von 216,8°C wird dadurch nicht verändert.
Der in dieser Lotlegierung verwendete Kupferanteil bewirkt infolge der Bildung von Cu₃Sn- und/oder Cu₆Sn₅-Nadeln die Überbrückung relativ breiter Lötspalte, doch hat die Ausbildung dieser intermetallischen Phasen zwangsläufig die bereits beschriebenen Nachteile im Bezug auf die Löteignung und auf die mechanisch/physikalischen Eigenschaften der Lötverbindung zur Folge.
Auch wird in der US 6,231,691 B1 eine Lotlegierungen mit dem Basislot Sn-4.7%Ag-1.7%Cu und 0.3% Fe vorbeschrieben.
Durch die Beimengung des Legierungsbestandteiles Fe wird der nahe dem Schmelzpunkt von reinem Sn (223°C) liegende eutektische Schmelztemperatur des Basislotes von 216,8°C nicht verändert.
Die Zugabe von 0,3%Fe zum Basislot bewirkt jedoch, daß dieses Lot zur Rostbildung neigt und daher im Bereich der Elektronik nicht eingesetzt werden kann.
Aus der US 5,938,862 sind zudem Sn - (8,0% bis 10%)In - 3,2%Ag - 1,0%Cu Lotlegierungen bekannt. Da jedoch Indium in Naturvorkommen nur sehr beschränkt zur Verfügung steht, ist es etwa doppelt so teuer wie Silber.
Dieser hohe Preis des Indiums wirkt sich auf Grund seines hohen Legierungsanteiles dann auch sehr stark auf den Preis der Lotlegierung aus.
Gleichzeitig hat jedoch der relativ hohe Indium-Gehalt auch zur Folge, daß diese In-Lotlegierungen sehr weich sind.
Gleichzeitig bewirkt der Indium-Gehalt insbesondere bei Einsatz in nichteutektischen Lotlegierungen, daß zwangsläufig Deformierungen (Löcher) auftreten, so daß diese In-Lotlegierungen dann zur Herstellung von Lotkugeln für die Chip-Herstellung zwangsläufig ungeeignet sind.

Aus dem Stand der Technik sind, wie beispielsweise in der EP 1231015 vorbeschrieben, eine Reihe von Sn-(2,0% bis 4%)Ag-(0,5% bis 1,5%)Cu Lotlegierungen bekannt.
Diesen Lötlegierungen ist gemeinsam, daß sie während des technologischen Abkühlprozesses sehr stark zur Ausbildung von groben Zinndentriden neigen, und ihnen demzufolge die daraus resultierenden Nachteile anhaften.
In der EP 0847829 wird eine weitere Lotlegierung beschrieben deren Lotvarianten ebenfalls zur Ausbildung von groben Zinndentriden tendieren und die zudem keinesfalls den für einen Einsatz als BGA-Kugeln optimalen Schmelz und Erstarrungsbereich von 214°C - 215°C erreichen.

Der Erfindung liegt somit die Aufgabe zugrunde die Nachteile des Standes der Technik zu beseitigen, und ein bleifreies Weichlot zu entwickeln, dessen Schmelz- und Erstarrungsbereich beginnend bei 214°C einerseits eutektisch ist, aber andererseits durch gezielte Dotierungen definiert nach oben erweitert werden kann und gleichzeitig keinesfalls zur Ausbildung grober Zinndentride neigt, nach dem Aufschmelzen eine glatte und homogene Oberfläche des Lotes gewährleistet, sich zudem durch sehr gute physikalische und chemische Eigenschaften wie beispielsweise eine sehr gute Benetzungsfähigkeit, eine hohe Wechselfestigkeit, eine gute Korrosionsbeständigkeit, eine gute Plastizität und Zähigkeit wie auch einen geringen elektrischen Widerstand auszeichnet und für den Einsatz als BGA-Kugeln (Lotkugeln für die Chip-Herstellung) geeignet ist.

Erfindungsgemäß wird diese Aufgabe durch ein bleifreies Weichlot auf der Basis einer Sn-Ag-Cu Lotlegierung gelöst, wobei das Weichlot besteht aus einer Basislegierung mit 5,0 bis 20 Gewichts-% Silber, 0,8 bis 1,2 Gewichts-% Kupfer, Rest jeweils Zinn und den übliche Verunreinigungen, wobei dieser Basislegierung stets 0,8 bis 1,2 Gewichts-% Indium und
- in einer ersten Variante von 0,01 bis 0,2 Gewichts-% Nickel,
- in einer zweiten Variante von 0,01 bis 0,2 Gewichts-% Germanium,
- und in einer dritten Variante von 0,01 bis 0,2 Gewichts-% eines
   Elementes der Lanthanoide wie beispielsweise Lanthan oder Neodym zulegiert sind, wobei die letztgenannten drei Varianten auch unter- und miteinander in Form von Vorlegierungen derart kombiniert sein können, daß deren Summe 0,01 bis 0,2 Gewichts-% beträgt.

Das bei einem Silberanteil von 5 bis 5,5 Gewichts-% erhaltene erfindungsgemäße bleifreie Weichlot hat eine nahezu eutektische Schmelz- und Erstarrungstemperatur im Bereich von maximal 214 bis 215°C, vermeidet beim Erkalten die Ausbildung von groben Zinndentriden und gewährleistet stets eine glatte und homogene Oberfläche des Lotes.
Wird die Dotierung von Silber auf mehr als 5,5 Gewichts-% bis 20 Gewichts-% erhöht, so stellt sich mit zunehmendem Silbergehalt ein definiert nach oben erweiterbarer Schmelzbereich, beginnend mit der eutektischen Temperatur von 214°C bis 215°C ein.
Diese erfindungsgemäßen Lote mit einer bei 214°C bis 215°C beginnenden, definiert nach oben erweiterbaren, nahezu eutektischen Schmelz- und Erstarrungstemperatur vermeiden beim Erkalten die Ausbildung von groben Zinndentriden und gewährleisten stets eine glatte und homogene Oberfläche der Lötstelle.
Gleichzeitig zeichnet sich das erfindungsgemäße bleifreie Weichlot durch sehr gute physikalische und chemische Eigenschaften, wie beispielsweise eine sehr gute Benetzungsfähigkeit, eine hohe Wechselfestigkeit, eine gute Korrosionsbeständigkeit, eine gute Plastizität und Zähigkeit wie auch durch einen geringen elektrischen Widerstand und nach dem Aufschmelzen durch eine glatte und homogene Oberfläche des Lotes aus.
Aufgrund dieser geschilderten Eigenschaften eignet sich das erfindungsgemäße bleifreie Weichlot insbesondere zur Herstellung von BGA-Kugeln (Lotkugeln für die Chip-Herstellung).
Weitere Merkmale, Einzelheiten und Vorteile der Erfindung ergeben sich neben dem Wortlaut der Ansprüche auch aus den nachfolgenden Erläuterungen zum Ausführungsbeispiel.

Die Erfindung soll nun in Verbindung mit zwei Ausführungsbeispielen näher erläutert werden.
In einem ersten Ausführungsbeispiel wird ein erfindungsgemäßes bleifreies Weichlot, bestehend aus 98,8 Gewichts-% einer Sn-5%Ag-1 %Cu Legierung, und 1 Gewichts-% Indium mit 0,2 Gewichts-% Nickel näher beschrieben.
Der erfindungsgemäße Zusatz von 1 Gewichts-% Indium verbessert dabei insbesondere solche physikalische Eigenschaften des Basislotes Sn-5%Ag-1 %Cu wie dessen Benetzungsfähigkeit, dessen Korrosionsbeständigkeit, dessen Plastizität und Zähigkeit.
Gleichzeitig reduziert die erfindungsgemäße Zugabe von Indium, bei Gewährleistung von nahezu eutektischen Eigenschaften der Gesamtlegierung, den elektrischen Widerstand im Nahtübergang.
In Verbindung mit einer zusätzlichen, erfindungsgemäßen 0,2 %-igen Zugabe von Nickel bleiben infolge der erfindungsgemäßen Gesamtzusammensetzung die angestrebten eutektischen Eigenschaften der erfindungsgemäßen Legierung nahezu erhalten. Gleichzeitig wird bewirkt, daß während des technologischen Abkühlprozesses der erfindungsgemäßen Weichlotlegierung keine groben Zinndentride ausgebildet werden.

In einem zweiten Ausführungsbeispiel wird ein erfindungsgemäßes bleifreies Weichlot, bestehend aus 98,8 Gewichts-% einer Sn-5%Ag-1%Cu Legierung, und 1 Gewichts-% Indium mit einer Dotierung von 0,2 Gewichts-% Lanthan in der Schmelze näher vorgestellt.
Wiederum verbessert der erfindungsgemäße Zusatz von 1 Gewichts-% Indium insbesondere solche physikalische Eigenschaften des Basislotes Sn-5%Ag-1 %Cu wie dessen Benetzungsfähigkeit, dessen Korrosionsbeständigkeit, dessen Plastizität und Zähigkeit.
Gleichzeitig reduziert die erfindungsgemäße Zugabe von Indium, bei Gewährleistung von nahezu eutektischen Eigenschaften der Gesamtlegierung, wiederum den elektrischen Widerstand im Nahtübergang.
In Verbindung mit einer zusätzlichen, erfindungsgemäßen 0,2 %-igen Zugabe von Lanthan, welches in Form von reinem Lanthan, oder aber als Vorlegierung mit z.B. Nickel oder Germanium erfolgen kann, bleiben infolge der erfindungsgemäßen Gesamtzusammensetzung die angestrebten eutektischen Eigenschaften der erfindungsgemäßen Legierung, wie auch deren Schmelzpunkt von 214°C bis 215°C erhalten.
Während des technologischen Abkühlprozesses der erfindungsgemäßen Weichlotlegierung wird wiederum bewirkt, daß keine groben Zinndentride ausgebildet werden.
Im Vergleich zu den traditionellen SnPbAg- und SnAgCu-Loten weist auch dieses erfindungsgemäße Lot eine verbesserte homogene Oberfläche, ein besseres Oxydationsverhalten und deutlich verbesserte mechanische Eigenschaften auf, so daß auch dieses Lot optimal für die BGA-Kugelproduktion eingesetzt werden kann.
Mittels der erfindungsgemäßen Lösung wurde ein bleifreies Weichlot vorgestellt, dessen Schmelz- und Erstarrungsbereich beginnend bei 214°C einerseits eutektisch ist, aber andererseits durch gezielte Dotierungen definiert nach oben erweitert werden kann und gleichzeitig keinesfalls zur Ausbildung grober Zinndentride neigt, nach dem Aufschmelzen eine glatte und homogene Oberfläche des Lotes gewährleistet, sich zudem durch sehr gute physikalische und chemische Eigenschaften wie beispielsweise eine sehr gute Benetzungsfähigkeit, eine hohe Wechselfestigkeit, eine gute Korrosionsbeständigkeit, eine gute Plastizität und Zähigkeit wie auch einen geringen elektrischen Widerstand auszeichnet und für den Einsatz als BGA-Kugeln (Lotkugeln für die Chip-Herstellung) geeignet ist.

## Patentansprüche

1. Bleifreies Weichlot auf der Basis einer Sn-Ag-Cu Lotlegierung, wobei das Weichlot besteht aus einer Basislegierung mit 5,0 bis 20 Gewichts-% Silber, 0,8 bis 1,2 Gewichts-% Kupfer, Rest jeweils Zinn und übliche Verunreinigungen, wobei dieser Basislegierung stets 0,8 bis 1,2 Gewichts-% Indium und 0,01 bis 0,2 Gewichts-% Nickel, oder an Stelle von Nickel entweder 0,01 bis 0,2 Gewichts-% Germanium oder 0,01 bis 0,2 Gewichts-% eines Elementes der Lanthanoide wie beispielsweise Lanthan oder Neodym zulegiert sind, wobei die letztgenannten drei Varianten auch unter- und miteinander in Form von Vorlegierungen derart kombiniert sein können, daß deren Summe 0,01 bis 0,2 Gewichts-% beträgt.

2. Bleifreies Weichlot nach Anspruch 1, **dadurch gekennzeichnet, daß** einer Basislegierung mit 5,0 bis 5,5 Gewichts-% Silber, 0,8 bis 1,2 Gewichts-% Kupfer, Rest jeweils Zinn und übliche Verunreinigungen, wobei dieser Basislegierung stets 0,8 bis 1,2 Gewichts-% Indium und 0,01 bis 0,2 Gewichts-% Nickel, oder an Stelle von Nickel entweder 0,01 bis 0,2 Gewichts-% Germanium oder 0,01 bis 0,2 Gewichts-% eines Elementes der Lanthanoide wie beispielsweise Lanthan oder Neodym zulegiert sind, wobei die letztgenannten drei Varianten auch unter- und miteinander in Form vor Vorlegierungen derart miteinander sein können, daß deren Summe 0,01 bis 0,2 Gewichts-% beträat.

## Claims

1. Lead-free soft solder on the basis of an Sn-Ag-Cu solder alloy, in which the soft solder consists of a basic alloy with 5.0-20% by weight of silver, 0.8-1.2% by weight of copper, and the rest of tin and normal impurities, in which the basic alloy always contains 0.8-1.2% by weight of indium and 0.01-0.2% by weight of nickel, or in place of nickel 0.01-0.2% by weight of germanium or 0.01-0.2% by weight of an element of the lanthanoid group such as lanthanum or neodymium, whereby the last three variants may be combined in such a way in the form of preliminary alloys that their sum amounts to 0.01-0.2% by weight.

2. Lead-free soft solder in accordance with Claim 1, **characterised by** the fact that the basic alloy consists of 5.0-5.5% by weight of silver, 0.8-1.2% by weight of copper, and the rest of tin and normal impurities, in which the basic alloy always contains 0.8-1.2% by weight of indium and 0.01-0.2% by weight of nickel, or in place of nickel 0.01-0.2% by weight of germanium or 0.01-0.2% by weight of an element of the lanthanoid group such as lanthanum or neodymium, whereby the last three variants may be combined in such a way in the form of preliminary alloys that their sum amounts to 0.01-0.2% by weight.

## Revendications

1. Brasage sans plomb sur la base d'un alliage de brasage Sn-Ag-Cu, le brasage étant composé d'un alliage de base présentant une quantité d'argent comprise entre 5,0 et 20 % de son poids, une quantité de cuivre comprise entre 0,8 et 1,2 % de son poids, le reste étant composé d'étain et des impuretés habituelles. A cet alliage de base est constamment ajouté une quantité d'indium comprise entre 0,8 et 1,2 % de son poids et une quantité de nickel comprise entre 0,01 et 0,2 % de son poids, ou bien à la place du nickel soit du germanium en quantité comprise entre 0,01 et 0,2 % de son poids soit un élément issu du groupe des lanthanides en quantité comprise entre 0,01 et 0,2 % de son poids, comme par exemple le lanthane ou le néodyme, les trois dernières variantes mentionnées pouvant être également combinées les unes aux autres et les unes avec les autres sous forme d'alliages mère de telle façon que leur somme soit comprise entre 0,01 et 0,2 % de son poids.

2. Brasage sans plomb selon l'exigence 1 **caractérisé par le fait que** le brasage est composé d'une alliage de base présentant une quantité d'argent comprise entre 5,0 et 5,5 % de son poids, une quantité de cuivre comprise entre 0,8 et 1,2 % de son poids, le reste étant composé d'étain et des impuretés habituelles. A cet alliage de base est constamment ajouté une quantité d'indium comprise entre 0,8 et 1,2 % de son poids et une quantité de nickel comprise entre 0,01 et 0,2 % de son poids, ou bien à la place du nickel soit du germanium en quantité comprise entre 0,01 et 0,2 % de son poids soit un élément issu du groupe des lanthanides en quantité comprise entre 0,01 et 0,2 % de son poids, comme par exemple le lanthane ou le néodyme, les trois dernières variantes mentionnées pouvant être également combinées les unes aux autres et les unes avec les autres sous forme d'alliages mère de telle façon que leur somme soit comprise entre 0,01 à 0,2 % de son poids.
